Europäisches Patentamt

European Patent Office

Office européen des brevets

(19)

(11) Publication number: **0 085 987**
**B1**

## (12) EUROPEAN PATENT SPECIFICATION

(45) Date of publication of patent specification: **20.07.88**

(51) Int. Cl.⁴: **F 02 M 69/00**

(21) Application number: **83101229.9**

(22) Date of filing: **09.02.83**

(54) **Fuel feeding apparatus for internal combustion engine.**

(30) Priority: **10.02.82 JP 20267/82**

(43) Date of publication of application:
**17.08.83 Bulletin 83/33**

(45) Publication of the grant of the patent:
**20.07.88 Bulletin 88/29**

(84) Designated Contracting States:
**DE FR GB**

(56) References cited:
**EP-A-0 037 279**
**EP-A-0 055 482**
**EP-A-0 087 621**
**DE-A-2 921 787**
**DE-A-3 103 178**
**US-A-4 286 562**

**Japonese Abstracts, Vol.4, Number 169 (M-43)**
**November 21, 1980 & JPA 55-119925;**

(73) Proprietor: **Hitachi, Ltd.**
**5-1, Marunouchi 1-chome**
**Chiyoda-ku Tokyo 100 (JP)**

(72) Inventor: **Nishimura, Yutaka**
**Yorii-Apartment House 348, 391-2**
**Tabiko Katsuta-shi (JP)**
Inventor: **Kuroiwa, Hiroshi**
**15-3, Moriyamacho-1-chome**
**Hitachi-shi (JP)**
Inventor: **Oyama, Yoshishige**
**24-18, Higashioshima-3-chome**
**Katsuta-shi (JP)**
Inventor: **Teranishi, Takao**
**4028-64, Kujicho**
**Hitachi-shi (JP)**

(74) Representative: **Patentanwälte Beetz sen. -**
**Beetz jun. Timpe - Siegfried - Schmitt-Fumian**
**Steinsdorfstrasse 10**
**D-8000 München 22 (DE)**

Courier Press, Leamington Spa, England.

## Description

The invention relates to an air flow rate metering apparatus for internal combustion engines according to the first portion of claim 1.

An air flow rate metering apparatus for internal combustion engines belongs to the prior art (EP-A-0 055 482), in which an air flow meter is disposed in a bypass air passage detouring the air-intake passage to sense any change in the air flow rate. The flow rate of air flowing through the bypass air passage is controlled by an air metering valve at a substantially constant level through a feedback of the output signal from the air flow meter. Simultaneously, the fuel feeding rate is controlled by a proportional type electromagnetic device which drives the air metering valve. This fuel feeding apparatus advantageously ensures a high response characteristics of the fuel feeding because the fuel feeding rate is automatically controlled in response to a change in the air flow rate by the proportional type electromagnetic device. But if the heat-type flow meter produces an electric out-put corresponding to the heat carried away from a heat-sensitive resistor in accordance with the air flow rate the flow rate of air is measured out not only for the air flowing forwardly but also for the air flowing back-wardly. Therefore, in the event that the intake air flow is a pulsating one involving a backward flow as in the case of heavy load operation, e.g. low-speed fuel-throttle operation of the engine, the output signal derived from this air flow meter is considerably greater than the signal corresponding to the actual intake air flow rate. Therefore, it is often experienced that the air-fuel ratio of the mixture actually supplied largely deviates from the set air-fuel ratio during heavy load operation of the engine.

From the EP-A-0 037 279 a fuel-air metering system for an internal combustion engine is known, in which an air throttle flap and a fuel valve are linked, so that the flow crossectional area of each valve is proportional to that of the other. The pressured fuel passes convergently from a relatively large fuel passage into a smaller, passage which is controlled by a plug valve actuated by the shaft of the throttle flap. For getting a relative steady fuel pressure in the fuel passage and for compensating the pump fluctuations the fuel passage is connected with at least one damping chamber, in which an airbag is disposed. But this damping chamber has no influence on the air flow in the manifold.

A further embodiment of an air flow metering apparatus comprising the features of the first part of claim 1 is known from the DE-A-31 03 178. In this air flow meter the bypass passage comprises a first upstream portion disposed in parallel to the venturi of the main air passage, a chamber on the lower end of this first bypass portion and a second downstream portion surrounding the smallest area of the venturi and having a slit-opening to the venturi. At least one thermal sensor element is mounted in the first straight portion of the bypass passage and electrically connected to a control unit.

In the event that the intake air flow is a pulsating one involving a backward flow as in the case of heavy load operation, e.g. low-speed fuel-throttle operation of the engine, the output signal derived from this air flow meter is considerably greater than the signal corresponding to the actual intake air flow rate. Therefore, it is often experienced that the air-fuel ratio of the mixture actually supplied largely deviates from the set air-fuel ratio during heavy load operation of the engine. Hitherto, no effective measure has been proposed for obviating this problem.

The object of the invention is to provide an air flow rate metering apparatus having a superior performance with good response characteristics in which the air flow rate is detected by a heat-type flow meter disposed in a bypass air passage to permit the supply of air-fuel mixture at the optimum air-fuel ratio even in the heavy load operation of the engine, without necessitating complication of the electronic controller.

The solutions of this object are characterized by the features of the second portions of claim 1.

In the following a preferred embodiment of the invention will be described in conjunction with the accompanying drawing, which shows

Fig. 1 a sectional view of the essential parts of an air metering apparatus;

Fig. 2 a sectional view taken along the line II-II in Fig. 1.

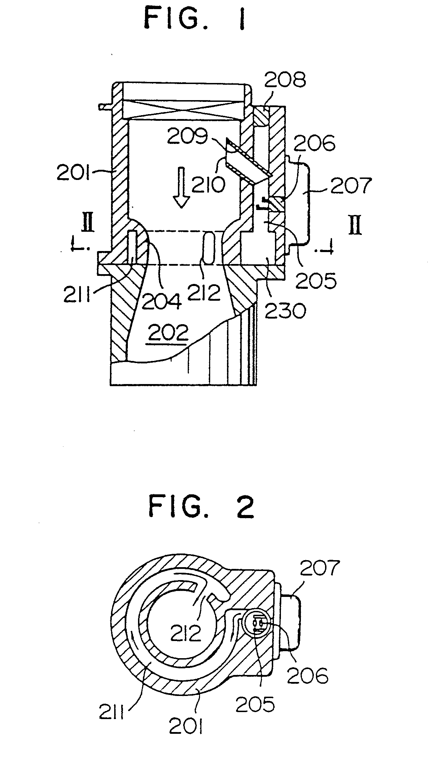

Figure 1 shows only a portion of the air-intake passage and a bypass air passage connected thereto, while other portions constituting the fuel feeding apparatus are not shown. A reference numeral 201 designates the body of a fuel feeding apparatus in which formed is an air-intake passage 202 having a venturi portion 204 provided therein. Numerals 206 and 207 denotes, respectively, a hot wire sensor and a processing circuit mounted on the body 201. The bypass air passage 205 is formed as a bore which extends from the upper end of the body in parallel with the air-intake passage 202, and is closed at an end by an end plug 208. The inlet of the bypass air passage 205 is constituted by a pipe 209 extending through the body 201 and opening to the air-intake passage 202 and the bypass air passage 205. In this illustrated embodiment, the pipe 209 is attached at an inclination to the direction of flow of the intake air. The end surface of the pipe 209 projected into the suction passage 202, i.e. the inlet end surface 210, is extended substantially in parallel with the flow of the intake air flow acts thereon. The lower end of the bypass air passage 205 extending in parallel with the air-intake passage 202 is connected to a cylindrical swirl chamber 230 which is disposed coaxially with the bypass air passage 205 at a position corresponding to the throat of the venturi portion 204. An annular outer peripheral portion 211 of the bypass passage is formed so as to surround the venturi portion 204. The outer peripheral portion 211 has a rectangular cross-section and is connected at its one end to the swirl chamber 230 through a linear passage portion which is connected tangentially to the swirl chamber 230 while the other end is opened as at 212 to communicate with the venturi portion 204.

The swirl chamber 230 of this embodiment receives the backward flow of air in the tangential direction thereto, so that the backward flow of air is made to swirl along the wall of the swirl chamber 230. In consequence, the bypass air passage 205 mounting the hot wire sensor 206 is effectively freed from the backward flow of air. In addition, the length of the bypass passage is increased due to the employment of the outer peripheral passage 211 below the swirl chamber and providing a communication between the bypass air passage 205 to the venturi portion 204, it is possible to increase the inertia of the air moving in the bypass air passage. It is, therefore, possible to eliminate any substantial influence of the pulsation of the flow of intake air to maintain a stable and steady flow of the air in the bypass air passage even when the engine is operated in such a region as to permit the occurrence of the blowing back.

As has been described, according to the invention, there is provided a fuel feeding apparatus for internal combustion engines, of the type having a heat-type sensor disposed in a bypass air passage detouring the intake passage and adapted to detect the flow rate of intake air thereby to maintain the air flow rate in the bypass air passage substantially constant and, at the same time, to control the fuel feeding rate, wherein the improvement comprises a pulsation suppressing means disposed in the bypass air passage and adapted to suppress the pulsation of air flow in the bypass air passage thereby to decrease the measurement error, whereby the air-fuel mixture of optimum air-fuel ratio in accordance with the set air-fuel ratio is formed and supplied to the engine over the entire region of the engine operation. In addition, the invention makes it possible to produce at low cost a fuel feeding apparatus having distinguished performance with a high response characteristics of the fuel supply, without being accompanied by any substantial complication of the electronic controller.

Needless to say, the fuel feeding apparatus can be applied to ordinary internal combustion engines other than the automotive engines, while the fuel feeding apparatus of the invention has been described through several preferred forms applied to automotive engines. Thus, the described embodiments are not exclusive and various changes and modifications are possible without departing from the scope of the invention which is limited solely by the appended claims.

## Claims

1. Air flow rate metering apparatus for internal combustion engines comprising: an air-intake passage (202) provided with a venturi portion (204); a bypass air passage (205) opening to and interconnecting the intake passage (202) upstream from the venturi portion to the venturi portion (204); a heat-type air flow meter (206) disposed in said bypass air passage (205); whereby a chamber (230) is connected to the upstream portion of said bypass air passage (205) and connected to the downstream portion of said bypass air passage (205), said downstream portion (211) having an annular form surrounding said venturi portion (204) with an opening to said venturi portion, characterized in that the chamber (230) is a cylindrical swirl chamber connected coaxially to the upstream portion of said bypass air passage (205) so as to permit the forward flow of the air to smoothly pass through a substantially central portion thereof, and in that one side wall of one end of the annular downstream portion is tangentially connected to the side wall of the swirl chamber (230) and the other side wall of this end of the annular downstream portion ends at a leading tongue between the swirl chamber (230) and the annular downstream portion (211), such that the backward flow of air tangentially flows into said cylindrical swirl chamber and then swirls along the wall of that swirl chamber (230) and in that the opening to the venturi portion (204) is disposed at the other end of the annular downstream portion (211).

2. Apparatus according to claim 1, characterized in that the upstream portion of the bypass air passage (205) is formed as a bore extending parallel to the air intake passage and closed by an end plug (208) and in that a pipe (209) inclined to the flow direction in the intake passage (202) connects the air intake passage (202) with the upstream portion of the bypass air passage (205) and having an opening (210) parallel to said air flow direction.

## Patentansprüche

1. Luftdurchsatzmengenmeßvorrichtung für Brennkraftmaschinen mit einem Saugluftkanal (202) mit einem Lufttrichter (204); einem Bypaßluftkanal (205), der aufstrom vom Lufttrichter (204) in den Saugluftkanal (202) mündet und diesen mit dem Lufttrichter verbindet; einem Hitzdraht-Luftdurchsatzmengenmesser (206), der in dem Bypaßluftkanal (205) angeordnet ist; wobei eine Kammer (230) mit dem Aufstromteil des Bypaßluftkanals (205) und mit dem Abstromteil des Bypaßluftkanals (205) verbunden ist und der Abstromteil (211) ringförmig ist und den Lufttrichter (204) umgibt und eine Öffnung in diesen aufweist, dadurch gekennzeichnet, daß die Kammer (230) eine zylindrische Wirbelkammer ist, die koaxial mit dem Aufstromteil des Bypaßluftkanals (205) so verbunden ist, daß der vorwärts gerichtete Luftstrom ungehindert durch einen im wesentlichen mittigen Abschnitt strömen kann, und daß eine Seitenwand eines Endes des ring- förmigen Abstromteils tangential an die Seitenwand der Wirbelkammer (230) angeschlossen ist und die andere Seiten- wand dieses Endes des ringförmigen Abstromteils an einer Führungszunge zwischen der Wirbelkammer (230) und dem ringförmigen Abstromteil (211) endet derart, daß der Luftrückstrom tangential in die zylindrische Wirbelkammer strömt und dann als Wirbelstrom an der Wandung dieser Wirbelkammer (230) entlangströmt, und daß die Öffnung in den Lufttrichter (204) am anderen Ende des ringförmigen Abstromteils (211) angeordnet ist.

2. Vorrichtung nach Anspruch 1, dadurch gekennzeichnet, daß der Aufstromteil des Bypaßluftkanals (205) als Bohrung aus gebildet ist, die sich parallel zum Saugluftkanal erstreckt und von einem Endstopfen (208) verschlossen ist, und daß eine zur Strömungsrichtung im Saugluftkanal (202) geneigte Leitung (209) den Saugluftkanal (202) mit dem Aufstromteil des Bypaßluftkanals (205) verbindet und eine zur Luftströmungsrichtung parallele Öffnung (210) aufweist.

## Revendications

1. Dispositif pour mesurer le débit d'air pour des moteurs à combustion interne, comprenant: un passage d'admission d'air (202) comportant une partie formant venturi (204), un passage d'air de dérivation (205) débouchant dans le passage d'admission (202) en amont de la partie formant venturi (204) et raccordant ce passage à cette partie formant venturi; un débitmètre d'air de type thermique (206) disposé dans ledit passage d'air de dérivation (205); et dans lequel une chambre (230) est raccordée à la partie amont dudit passage d'air de dérivation (205) et est raccordée à la partie aval dudit passage d'air de dérivation (205), ladite partie aval (211) possédant une forme annulaire entourant ladite partie formant venturi (204) et comportant une ouverture débouchant dans ladite partie formant venturi, caractérisé en ce que la chambre (230) est une chambre cylindrique à tourbillons raccordée coaxialement à la partie amont dudit passage d'air de dérivation (205) de manière à permettre à l'écoulement direct de l'air de traverser de façon uniforme une partie sensiblement centrale de cette chambre, et en ce qu'une paroi latérale d'une extrémité de la partie aval annulaire est raccordée tangentiellement à la paroi latérale de la chambre à tourbillons (230) et que l'autre paroi latérale de cette extrémité de la partie aval annulaire se termine sous la forme d'une languette de guidage entre la chambre à tourbillons (230) et la partie aval annulaire (211) de sorte que l'écoulement rétrograde d'air circule tangentiellement en pénétrant dans ladite chambre cylindrique à tourbillons, puis tourbillonne le long de la paroi de cette chambre à tourbillons (230), et en ce que l'ouverture débouchant dans la partie formant venturi (204) est disposée au niveau de l'autre extrémité de la partie aval annulaire (211).

2. Dispositif selon la revendication 1, caractérisé en ce que la partie amont du passage d'air de dérivation (205) est réalisée sous la forme d'un perçage s'étendant parallèlement au passage d'air d'admission et fermé par un bouchon d'extrémité (208), et en ce qu'un conduit (209) incliné par rapport à la direction d'écoulement dans le passage d'admission (202) raccorde le passage d'air d'admission (202) à la partie amont du passage d'air de dérivation (205) et possède une ouverture (210) parallèle à ladite direction de l'écoulement d'air.

# FIG. 1

# FIG. 2